Europäisches Patentamt

European Patent Office

Office européen des brevets

(19)

(11) Publication number: **0 252 597 B1**

# EUROPEAN PATENT SPECIFICATION

(12)

(45) Date of publication of patent specification: 10.04.91

(51) Int. Cl.⁵: **B65D 65/38**, B65D 81/24, A23B 4/10, A23B 4/03, A23B 4/14

(21) Application number: 87304777.3

(22) Date of filing: 29.05.87

(54) Smoking of film packaged food and packaging film used for this purpose.

(30) Priority: 30.05.86 JP 124935/86

(43) Date of publication of application:
13.01.88 Bulletin 88/02

(45) Publication of the grant of the patent:
10.04.91 Bulletin 91/15

(84) Designated Contracting States:
AT DE ES GB IT NL SE

(56) References cited:
EP-A- 0 044 484
EP-A- 0 139 888
DE-A- 2 313 994
US-A- 2 849 320
US-A- 3 388 085

CHEMICAL ABSTRACTS, vol. 104, no. 15,
April 1986, page 597, no. 128645x, Columbus,
Ohio, US

(73) Proprietor: KUREHA KAGAKU KOGYO
KABUSHIKI KAISHA
9-11 Horidome-cho 1-chome Nihonbashi
Chuo-ku
Tokyo 103(JP)

(72) Inventor: Hisazumi, Nobuyuki
11-14-303 Higashi-Manabe-machi
Tsuchiura-shi Ibaraki-ken(JP)
Inventor: Funabashi, Shinichiro
11-14-303 Higashi-Manabe-machi
Tsuchiura-shi Ibaraki-ken(JP)
Inventor: Ochiai, Yukihiro
54-19, Shisawaamagasaku Nakoso-machi
Iwaki-shi Fukusjima(JP)

(74) Representative: Lawrence, Peter Robin
Broughton et al
GILL JENNINGS & EVERY 53-64 Chancery
Lane
London WC2A 1HN(GB)

## Description

The present invention relates to a smokable food-packaging film which permits smoking of food packed in it, as a result of permeation of smoke through the film, and yet which can provide excellent gas barrier properties after the smoking treatment.

It is well known to smoke foodstuffs, such as processed meat, while they are packaged within a film, for instance to regulate and maintain the shape of the foodstuff. The film has to be sufficiently permeable to the smoking ingredients to permit them to permeate quickly through the film and into the packaged food. Typical films for this purpose include the entrails of certain animals such as cattle, swine and sheep, as well as cellulosic films made from viscose.

These smoke-permeable films have traditionally lacked the gas barrier properties that are required for long term food preservation and so when this is required it has been customary to package the food in a primary packaging, that is permeable to the smoke ingredients but that is inadequate for long term preservation, and a secondary packaging that provides good gas barrier properties for long term storage.

As the smokable primary packaging material, there have been proposed natural high polymers such as collagen, chitin, polysaccharide, etc., paper impregnated with polyvinyl alcohol resin (Japanese Patent Publication No.47-43198 (1972)), paper impregnated wityh ethylene-vinyl alcohol copolymer containing a plasticiser (Japanese Patent Application Laid Open (Kokai) No.52-57347 (1977)), and polyalkylene oxide-containing copolymer polyester film (Japanese Patent Publication No.59-117530 (1984)). It is also known (GB 1,397,472) to use films that have been perforated or otherwise mechanically made porous so as to improve smokability.

To provide long term storage, all such films have to be used in combination with a secondary packaging material that has the necessary gas barrier properties. This incurs the disadvantage of requiring the supply of a second film and the involvement of additional production steps and an additional packaging machine.

It would therefore be desirable to provide a single film that has satisfactory smoke permeability properties but which will also provide long term gas-barrier properties after smoking.

It is proposed in EP 0139888A1 that a film that provides both smoke permeability and oxygen-barrier properties can be formed from a polyamide or a blend of the polyamide and an ionomer resin, a modified ethylene vinyl acetate copolymer or a modified polyolefin. In particular it is suggested that films comprising polyamides capable of absorbing water in an amount of at least 3% of their own weight of water up to saturation point, such as polycaprolactam, polyaminoenathic acid amide, polyhexamethyladipamide, poly-hexamethylenesebacic acid amide, etc., and blend polymers of these polyamides and ionomer resins, modified ethylene-vinyl acetate copolymer and/or modified polyolefins would be useful as smokable thermoplastic synthetic casings. However the only specific description in EP 0139888 is of colourless transparent shrinkable stretched casings made from polycaprolactam or polyhexamethyleneadipamide and these particular films have proved to have inadequate oxygen gas-barrier properties for the long term storage of foodstuffs which are susceptible to oxygen.

Another smokable film that also has inadequate oxygen gas-barrier properties for long term storage of foodstuffs is described in Japanese application Kokai 60-180832 (1985) and comprises at least one layer of a polyamide resin having a water absorption of not less than 5%, an oxygen-permeability of 50 to 300 $cc/m^2.day.atm$ (at 30 $^\circ$ C and 60% Relative Humidity (RH) and a thickness of 5 to 50 $\mu m$.

Accordingly there is still a need for a smokable food-packaging film (i.e., a film that permits smoking of food that is packed within it) but which gives improved oxygen gas-barrier properties.

A smokable food-packaging film according to the invention is formed comprising a mixture of:

(a) 80 to 98% by weight of a polymer blend comprising not less than 30% by weight of a polyamide resin and not more than 70% by weight of a polyolefin and/or a copolymer of an $\alpha$-olefin and vinyl alcohol; and

(b) 2 to 20% by weight of an additive which is compatible with the polymer blend (a), liquid at 70 to 95 $^\circ$ C, soluble in water and/or oil, and

at least one member selected from the group consisting of aliphatic alcohols, polyglycols, glycerol, ethylene glycol, propylene glycol, polyoxyethylene sorbitan fatty acid esters, polyhydric alcohol esters, aliphatic dibasic acid esters, polyvalent hydroxycarboxylic acid esters; aliphatic acid esters and epoxy plasticisers.

We have found that such films can easily be formulated so that they have smokability, i.e., permeability to smoking ingredients, such that foods can easily be smoked while packed within them and yet which can provide suitable gas-barrier properties after smoking. For instance the permeability before and during smoking can be similar to the permeability of collagen films, but the permeability to oxygen after smoking can be very good, in contrast to collagen and other smokable primary packaging films.

The polymer blend is preferably selected such that the corresponding film made from the blend without the additive (referred to below as the non-additive film) has oxygen-permeability 30°C and 60% AH of not more than 200 cc/m².day.atm, preferably not more than 100 cc/m².day.atm, more preferably not more than 50 cc/m².day.atm.

Permeability values of above 200 cc/m².day.atm are satisfactory, without the need for a secondary packaging, for many foods but for foods that are particularly susceptible to oxygen the polymer blend should be selected such that the permeability is less, and is preferably not more than 50 cc/m².day.atm. For instance foods that are very susceptible to oxygen, for instance causing discolouration of myoglobin, e.g., pasty meat products, can satisfactorily be packaged in such films without causing discolouration on long-term storage but they can, nevertheless, initially be smoked.

The polymer blend used in the present invention is composed of a mixture comprising not less than 30% by weight, preferably 50 to 95% by weight, more preferably 60 to 80% by weight of a polyamide resin and not more than 70% by weight, preferably 5 to 50% by weight, more preferably 20 to 40% by weight of an olefin polymer. Suitable polyamide resins include nylon 6, nylon 7, nylon 8, nylon 11, nylon 12, nylon 6-6, nylon 6-10, mixtures thereof, and copolymers of the monomers from which these are made.

The olefin polymer is preferably a polyolefin and/or a copolymer of an alpha olefin with vinyl alcohol. Copolymers of an olefin with (meth) acrylic acid or alkyl (meth) acrylate or vinyl acetate can be used. In particular suitable olefin polymers include polyethylene, polypropylene, ionomer resins, ethylene-vinyl acetate copolymer, ethylene-ethyl acrylate copolymer, ethylene-acrylic acid copolymer, ethylene-methyl acrylate copolymer, ethylene-methyl methacrylate copolymer, and ethylene-methacrylic acid copolymers. Examples of suitable alpha-olefin and vinyl alcohol copolymers are ethylene-vinyl alcohol copolymer, propylene-vinyl alcohol copolymer, and butene-l-vinyl alcohol copolymer.

The additives that are included with the polymer blend must be compatible with the polymer blend (a) and must be liquid at a temperature in the range 70 to 95°C and which is the steam heating temperature to which the packaged material is subjected after smoking. The amount of the additives is preferably 5 to 10% by weight. Suitable additives are aliphatic alcohols preferably having not less than 10 carbon atoms; polyglycols, glycerol, ethylene glycol and propylene glycol; polyoxyethylene sorbitan fatty acid esters; polyhydric alcohol esters such as glycerol monooleate, glycerol monostearate, glycerol triacetate, glycerol tripropionate, glycerol tributylate, glycerol tripentanoate, triethylene glycol dicaprylate, triethylene glycol dicaprylate, and 2,2,4-trimethyl-1,3-pentanediol-di-i-butylate; aliphatic dibasic acid esters such as adipic acid, sebacic acid and azelaic acid; polyvalent hydroxycarboxylic acid esters such as tartaric acid, acetylcitric acid and citric acid; aliphatic acid esters such as acetylricinolic acid, palmitic acid, stearic acid and oleic acid; and epoxy plasticisers such as epoxidised soybean oil, epoxidised castor oil, epoxidised linseed oil, epoxidised sunflower oil, epoxidised linseed oil fatty acid butyl and octyl epoxystearate.

The film preferably has a thickness of 15 to 100, preferably 20 to 60, μm. It is preferably made by a conventional melt moulding method and can be provided and used either in unstretched or stretched (i.e., non-shrinkable or shrinkable) form, according to the intended use. If it is to be provided in shrinkable form then the melt moulded film should be stretched in conventional manner.

The preferred way of utilising the film is to package in the film in the conventional way the food that is to be smoked, and then subject the packaged food to the smoking ingredients in a suitable smoking machine, generally at a temperature of 40 to 80°C for a time of several minutes to several hours, depending upon the type of food, and then steam-heating the package generally at a temperature of 70 to 95°C, preferably 80 to 90°C.

The described additives in the polymer blend permit the smoking components that are generated on heating suitable smoking material during the smoking treatment to permeate through the film and into the packaged food to impart the desired smoking smell and taste to the food. Thus before and during the smoking treatment the film has substantially no gas-barrier properties and allows easy passage of the smoke components through the film.

However during the subsequent heating the defined additives are caused to migrate to the outside of the film and/or into the packaged foodstuff and as a result of this migration the film acquires oxygen gas-barrier properties that are substantially the same as those of the corresponding non-additive film, i.e., the corresponding film made from the polymer component in the absence of the additives. Thus in the invention the film after heat treatment subsequent to smoking preferably has oxygen gas barrier properties of not more than 200, preferably not more than 100 and most preferably not more than 50, cc/m².day.atm.

The foodstuffs that can be packaged with the film include those which need smoking and high preservability, for example, livestock products such as ham, sausage, bacon and meat, dairy products such as cheese, processed marine products such as various kinds of fishes and shellfishes, and egg products.

The smokable packaging film of the present invention shows excellent smokability and high oxygen gas-barrier properties during storage and is therefore useful for long-time preservation of smoked foodstuffs packages. It exhibits excellent smokability and oxygen gas-barrier properties in its use for packaging of the foodstuffs susceptible to oxygen such as ham, sausage, bacon, meat, cheese and the like, and allows long-time storage of these foodstuffs without conducting secondary packaging on the smoked packages. It is particularly surprising that these good results can be obtained when the resin component consists of or comprises polyamide resins of low water absorptivity such as nylon 11 and 12, since these have previously been considered unsuitable for use as smokable packaging films.

The following are some examples of the invention.

Examples 1 and 2

By using a melt extruder having a cricular die, the mixtures of the polymer components and additives shown in Table 2 were extruded into a tubular form and worked into stretched tubular films of 40 to 50 μm in thickness and 70 mm in folded width by the conventional inflation method.

The oxygen-permeability of the obtained films at 30°C and 60% RH was measured by using OX-TRAN Type 100 of Modern Control Co.Ltd. The results are shown in Table 3.

Each of the obtained tubular films was stuffed with about 200 g of pork sausage material composed of 50% by weight of pork, 20% by weight of fat, 6% by weight of starch, 2% by weight of common salt and 22% by weight of water, and both ends of the stuffed tubular film were clipped to obtain a package. Each of the thus obtained packages was dried under the conditions of 50°C and 10-30% RH for 15 minutes and then smoked under the conditions of 60°C and 40-60% RH for 90 minutes in a smoke chamber and then subjected to a steam-heating treatment at 75°C for 60 minutes, and the effect of smoking on each package was determined by a sensory test (panel test).

In the sensory test (panel test), the smoking effect was evaluated as follows:

0: No smokability was admitted. (No smoking effect).
1: Smokability was admitted slightly.
2: Smokability was admitted evidently.
3: Smokability was admitted strongly.
4: Smokability was admitted very strongly.

The results are shown in Table 3.

COMPARATIVE EXAMPLES 1 and 2

By the same method as used in Example 1, there were obtained the stretched tubular films of 40 μm in thickness and 70 mm in folded width from a mixture of nylon 12 and ethylene-vinyl alcohol copolymer (Comparative Example 1) and a mixture of copolymer of a monomer of nylon 6 and a monomer of nylon 66, ethylene-vinyl alcohol copolymer and low-density polyethylene (Comparative Example 2).

The oxygen-permeability of the obtained films at 30°C and 60% RH was as shown in Table 3.

The sensory test was also conducted to determine the smoking effect on the pork sausages packaged with these films and treated in the same way as in Example 1, the results being shown in Table 3.

EXAMPLE 3

By the same method as used in Example 1, the mixtures of polymer blends and additives shown in Table 2 were extruded into a tubular form, thereby obtaining the non-stretched tubular films of 40-50 μm in thickness and 70 mm in folded width.

The oxygen-permeability of the obtained films at 30°C and 60% RH is shown in Table 3.

The results of the sensory test for smoking effect on the pork sausage packages obtained in the same way as in Example 1 are also shown in Table 3.

COMPARATIVE EXAMPLE 3

4

A non-stretched tubular film of nylon 6 having thickness of 40 μm and a folded width of 70 mm was obtained by the same method as in Example 3.

The oxygen-permeability of this film at 30°C and 60% RH is shown in Table 3.

The results of the sensory test on smokability of the pork sausage package obtained by using this film according to the method of Example 1 are also shown in Table 3.

## Table 2

| | Polymer | | Additive | Mixing ratio ($\frac{polymer}{additive}$) | Type of film (thickness) |
|---|---|---|---|---|---|
| | Components | Mixing ratio | | | |
| Example 1 | Nylon 6 | - | Polyoxyethylene sorbitan monooleate | 95/5 | Stretched film (40 μm) |
| Example 2 | Nylon 12 | - | Glycerin | 90/10 | Stretched film (50 μm) |
| Example 3 | Nylon 6-10 | - | Monoglyceride stearate | 95/5 | Stretched film (40 μm) |
| Example 4 | Nylon 12 and EVAL[*1)] | 50/50 | Glycerin | 95/5 | Stretched film (40 μm) |
| Example 5 | Nylon 6 and nylon 6-6 copolymer[*2)], EVAL and LDPE[*3)] | 60/30/10 | Glycerin | 95/5 | Stretched film (40 μm) |
| Example 6 | Nylon 6 | - | Glycerin | 95/5 | Non-stretched film (40 μm) |

EP 0 252 597 B1

| | Polymer | | Additive | Mixing ratio (polymer/additive) | Type of film (thickness) |
|---|---|---|---|---|---|
| | Components | Mixing ratio | | | |
| Example 7 | Nylon 12 | - | Polyoxyethylene sorbitan monooleate | 88/12 | Non-stretched film (50 µm) |
| Example 3 | Nylon 12 and EVAL | 50/50 | Glycerin | 95/5 | Non-stretched film (40 µm) |
| Comp. Example 1 | Nylon 12 and EVAL | 50/50 | - | - | Stretched film (40 µm) |
| Comp. Example 2 | Nylon 6 and nylon 6-6 copolymer, EVAL and LDPE | 60/30/10 | - | - | Stretched film (40 µm) |
| Comp. Example 3 | Nylon 6 | - | - | - | Non-stretched film (40 µm) |

Notes:  *1) Ethylene-vinyl alcohol copolymer.

*2) Copolymer of a monomer of nylon 6 and a monomer of nylon 6-6.

*3) Low-density polyethylene.

EP 0 252 597 B1

## Table 3

| | Sensory test on smokability | | | | Utilizability Evaluation | |
|---|---|---|---|---|---|---|
| | Taste | Smell | Oxygen-permeability (cc/m². day.atm) | | Smokability | Preservability |
| | | | Before smoking | After smoking | | |
| Example1 | 3 | 3 | 940 | 80 | A | A |
| Example2 | 2 | 2.5 | 1500 | 180 | B | B |
| Example3 | 2 | 2 | 480 | 100 | B | B |
| Example4 | 2 | 2.5 | 1150 | 40 | B | A |
| Example5 | 2.5 | 3 | 980 | 50 | A | A |
| Example6 | 3 | 3.5 | 1250 | 82 | A | A |
| Example7 | 3 | 3 | 1650 | 190 | A | B |
| Example8 | 2.5 | 3 | 1150 | 60 | A | A |
| Comp. Example1 | 1 | 1 | 40 | – | C | A |
| Comp. Example2 | 1.5 | 2 | 50 | – | C | A |
| Comp. Example3 | 1.5 | 2 | 140 | – | C | B |

EP 0 252 597 B1

## Criteria for Utilizability Evaluation

(i)    Smokability (panel test)

A:  Smokability was admitted strongly. ⎞
                                        ⎟ (Utilizable)
B:  Smokability was admitted fairly strongly. ⎠

C:  Smokability was admitted. ⎞
                             ⎟ (Not Utilizable)
D:  No smokability was admitted. ⎠

(ii)    Preservability (long-time)

A:  Excellent ⎞
             ⎟ (Utilizable)
B:  Good      ⎠

C:  Not too bad.  (Unsatisfactory for practical use)

D:  Bad.  (Not Utilizable)

It is necessary for being utilizable that the package has a rating of B or better for both smokability and long-time preservability.

Also, the "utilizable" film should have an evaluation value of 2 or greater for both taste and smell in the sensory test on smokability.

## Claims

1.  A smokable food-packaging film comprising a mixture of:
    (a) 80 to 98% by weight of a polymer blend comprising not less than 30% by weight of a polyamide resin and not more than 70% by weight of a polyolefin and/or a copolymer of an $\alpha$-olefin and vinyl alcohol; and
    (b) 2 to 20% by weight of an additive which is compatible with the polymer blend (a), liquid at 70 to 95°C, soluble in water and/or oil, and
    at least one member selected from the goup consisting of aliphatic alcohols, polyglycols, glycerol, ethylene glycol, propylene glycol. polyoxyethylene sortitan fatty acid esters, polyvalent hydroxycarboxylic acid esters; aliphatic acid esters and epoxy plasticisers.

2.  A film according to claim 1, wherein the polyamide resin is nylon 6, nylon 7, nylon 8, nylon 11, nylon 12, nylon 6-6, nylon 6-10, a mixture thereof, or a copolymer of these monomeric compounds.

3.  A film according to claim 1 or claim 2 wherein the polymer blend comprises 30 to 95% polyamide resin with 70 to 5% olefin polymer which is a polyolefin, an ionomer resin or a copolymer of an olefin with (meth) acrylic acid, alkyl (meth) acrylate, vinyl acetate or vinyl alcohol.

4.  A film according to claim 1 in which the olefin is selected from polyethylene, polypropylene, ionomer resin, ethylene-vinyl acetate copolymer, ethylene-ethyl acrylate copolymer, ethylene-acrylic acid copolymer, ethylene-methyl acrylate copolymer, ethylene-methyl methacrylate copolymer, and ethylene-methacrylic acid copolymer and copolymers of vinyl alcohol with ethylene, propylene or butene-1.

5. A film according to any preceding claim in which the additive comprises polyoxyethylene sorbitan monooleate or glycerol monostearate.

6. A film according to any preceding claim having a thickness of 15 to 100 μm.

7. A film according to any preceding claim in which the corresponding film formed from the blend in the absence of the additive has an oxygen permeability of not more than 200, and preferably not more than 50, cc/m$^2$.day.atm.

8. A method in which a food product is packed in a film according to any preceding claim and is then smoked by exposing the package at 40 to 80°C to smoke ingredients that permeate the film and is then subjected to steam treatment at 70 to 95°C.

9. A method according to claim 8 in which the oxygen permeability of the film after the steam treatment is not more than 200, and preferably not more than 50, cc/m$^2$.day.atm.

10. A smoked food package comprising a foodstuff packaged within a film characterised in that the film is a film according to any of claims 1 to 7.

**Revendications**

1. Film d'emballage pour aliments rumables se composant d'un mélange de:
   (a) 80 à 98% en poids d'un mélange de polymères comportant au minimum 30% en poids d'une résine de polyamide et au maximum 70% en poids d'une polyoléfine et/ou d'un copolymère d'une α-oléfine et d'un alcool de vinyle; et
   (b) 2 à 20% en poids d'un additir compatible avec le mélange de polymères (a), liquide à 70 à 95°c, soluble dans l'eau et/ou l'huile, et
   au moins un membre sélectionné dans le groupe composé d'alcools aliphatiques, de polyglycols, glycérols, éthylène glycol, propylène glycol, polyoxyéthylènes, esters sorbitol d'acides gras, esters d'acides hydroxycarboxyliques polyvalents; esters d'acides aliphatiques et plastifiants époxydiques.

2. Film selon la revendication 1, où la résine de polyamide est du nylon 6, nylon 7, nylon 8, nylon 11, nylon 12, nylon 6-6, nylon 6-10, un mélange de ceux-ci ou un copolymère de ces composés monomériques.

3. Film selon la revendication 1 ou la revendication 2, où le mélange de polymères se compose de 30 à 95% de résine de polyamide avec 70 à 5% de polymère d'oléfine qui est une polyoléfine, une résine ionomère ou un copolymère d'une oléfine avec acide (méth)acrylique, (mét)acrylate alcoyle, acétate de vinyle ou alcool de vinyle.

4. Film selon la revendication 1 où l'oléfine est sélectionnée à partir de polyéthylène, polypropylène, résine ionomère, copolymère éthylène-acétate de vinyle, copolymère éthylène-acrylate d'éthyle, copolymère éthylène-acide acrylique, copolymère éthylène-acrylate de méthyle, copolymère éthylène-méthacrylate de méthyle et copolymère éthylène-acide méthacrylique et copolymères d'alcool de vinyle avec éthylène, propylène ou butène-1.

5. Film selon l'une quelconque des revendications précédentes, où l'additif se compose d'un monooléat sorbite de polyoxyéthylène ou d'un monostéarate de glycérol.

6. Film selon l'une quelconque des revendications précédentes, présentant une épaisseur de 15 à 100μm.

7. Film selon l'une quelconque des revendications précédentes, où le film correspondant composé à partir du mélange en l'absence d'additif présente une perméabilité à l'oxygène de 200 au maximum et de préférence au plus égale à 50, cc/m$^2$.jour.atm.

8. Procédé selon lequel un produit alimentaire est emballé dans un film selon l'une quelconque des revendications précédentes puis fumé par exposition de l'emballage à 40-80°c à des ingrédients de fumage pouvant pénétrer le film, puis est soumis à un traitement à la vapeur à 70-95°C.

9. Procédé selon la revendication 8, où la perméabilité à l'oxygène du film après traitement à la vapeur n'est pas supérieure à 200, et de préférence pas supérieure à 50, cc/m².jour.atm.

10. Un emballage de produit alimentaire fumé comprenant un produit alimentation emballé dans un film, caractérisé en ce que le film est un film selon l'une queloonque des revendications 1 à 7.

**Ansprüche**

1. Räucherbare Nahrungsmittelverpackungsfolie umfassend eine Mischung von:
(a) 80 bis 98 Gew.-% einer Polymermischung enthaltend nicht weniger als 30 Gew.-% eines Polyamidharzes und nicht mehr als 70 Gew.-% eines Polyolefins und/oder eines Copolymers aus einem ∝-Olefin und Vinylalkohol und
(b) 2 bis 20 Gew.-% eines bei 70 bis 95°C flüssigen, in Wasser und/oder Öl löslichen Additivs, welches mit der Polymermischung (a) verträglich ist und
wenigstens ein Mitglied der folgenden Gruppe bestehend aus aliphatischen Alkoholen, Polyglykolen, Glycerin, Ethylenglykol, Propylenglykol, Polyoxyethylensorbitanfettsäureester, polyvalente Hydroxycarbonsäureester, aliphatische Säureester und Epoxyweichmacher.

2. Folie nach Anspruch 1, worin das Polyamidharz Nylon 6, Nylon 7, Nylon 8, Nylon 11, Nylon 12, Nylon 6-6, Nylon 6-10, eine Mischung davon oder ein Copolymer dieser Monomerverbindungen ist.

3. Folie nach Anspruch 1 oder 2, worin die Polymermischung 30 bis 95% Polyamidharz mit 70 bis 5% Olefinpolymer, welches ein Polyolefin, ein ionomeres Harz, oder ein Copolymer eines Olefins mit (Meth)acrylsäure, Alkyl(meth)acrylat, Vinylacetat oder Vinylalkohol ist, enthält.

4. Folie nach Anspruch 1, worin das Olefin aus Polyethylen, Polypropylen, ionomerem Harz, Ethylen-Vinylacetat Copolymer, Ethylen-Ethylacrylat Copolymer, Ethylen-Acrylsäure Copolymer, Ethylen-Methylacrylat Copolymer, Ethylen-Methylmethacrylat Copolymer und Ethylen-Methacrylsäure Copolymer und Copolymeren aus Vinylalkohol mit Ethylen, Propylen oder 1-Buten gewählt ist.

5. Folie nach einem der vorhergehenden Ansprüche, in welcher das Additiv Polyoxyethylensorbitanmonooleat oder Glycerinmonostearat umfaßt.

6. Folie nach einem der vorhergehenden Ansprüche, welche eine Dicke von 15 bis 100 μm aufweist.

7. Folie nach einem der vorhergehenden Ansprüche, in welcher die aus der Mischung in Abwesenheit des Additivs gebildete Folie eine Sauerstoffdurchlässigkeit von nicht mehr als 200 und vorzugsweise nicht mehr als 50 cm³/m².Tag.atm. aufweist.

8. Verfahren, bei welchem ein Nahrungsmittel in eine Folie nach einem der vorhergehenden A verpackt wird und welche dann durch Aussetzen der Verpackung einer Temperatur von 40 bis 80°C, damit Rauchbestandteile die Folie durchdringen, geräuchert wird, und welche anschließend einer Dampfbehandlung bei 70-95°C ausgesetzt wird.

9. Verfahren nach Anspruch 8, in welchem die Sauerstoffpermeabilität der Folie nach der Dampfbehandlung nicht größer als 200, und vorzugsweise nicht größer als 50 cm³/m².Tag.atm. ist.

10. Geräucherte Nahrungsmittelverpackung enthaltend ein Nahrungsmittel verpackt in einer Folie, dadurch gekennzeichnet, daß die Folie eine Folie in Übereinstimmung mit einem der Ansprüche 1 bis 7 ist.